# DEMANDE DE BREVET EUROPEEN

(11) **EP 0 682 868 A1**
(43) Date de publication de la demande: **22.11.1995**
(21) Numéro de dépôt: 94490027.3
(22) Date de dépôt: 16.06.1994
(51) Int. Cl.: A01N 59/12

(54) **Solution antiseptique et/ou désinfectante, destinée notamment à l'hygiène humaine et/ou animale comprenant au moins de l'hexamidine et un iodophore**

(30) Priorité: 16.05.1994 FR 9406151
(71) Demandeur: Société Anonyme: Laboratoires ANIOS, F-59260 LILLE-HELLEMMES (Nord) (FR); CENTRE NAT. D'ETUDES VETERINAIRES ET ALIMENTAIRES ( CNEVA), Ets. public à Caractère Adm. sous tutelle du Min. Agric. etForêt, F-94701 Maisons-Alfort (FR)
(72) Inventeur: Letartre, Bertrand, F-59260 Lille-Hellemmes (FR); Maris, Pierre, F-35300 Javene (FR)
(74) Mandataire: Duthoit, Michel

(57) **Abrégé**

Solution antiseptique et/ou désinfectante, destinée notamment à l'hygiène humaine et/ou animale, comprenant au moins de l'hexamidine et un iodophore.

Selon l'invention, elle comporte en pourcentage en poids :
- de 0,001 à 1 % d'hexamidine,
- de 0,0013 à 4 % d'iodophore,
- de 99,9977 à 95 % de solvants,
la somme des composants étant égale à 100 %.

## Description

La présente invention a pour objet une solution antiseptique et/ou désinfectante, destinée notamment à l'hygiène humaine et/ou animale comprenant au moins de l'hexamidine et un iodophore.

Elle trouvera son application dans tous les secteurs de l'activité dans lesquels l'on doit nettoyer et/ou désinfecter des objets divers et variés ou des locaux ou aseptiser la peau.

Plus précisément, l'on peut citer comme application de cette solution, son utilisation dans le domaine de l'hygiène médicale, notamment pour le nettoyage et/ou la désinfection des objets, ainsi que l'antiseptie de la peau.

Actuellement, pour de telles applications, on utilise des produits contenant des substances actives variées, telles que des biguanides, des dérivés mercuriels, des dérivés halogènes, des tensio-actifs...

Ces solutions, en pratique, n'apportent pas toujours satisfaction et, ne sont pas toujours adaptées en fonction des applications désirées.

Par ailleurs, il a été constaté expérimentalement et il est connu qu'une solution comportant un mélange d'hexamidine et d'un iodophore présentait un effet synergique anti microbien.

Ces tests expérimentaux ont été effectués dans des conditions opératoires déterminées à petite échelle dans des tubes à essais, en utilisant comme solvant de l'eau distillée, et sur des souches de micro-organismes spécifiques.

Or, ces conditions expérimentales sont différentes de celles que l'on rencontre en pratique, notamment lorsque l'on doit appliquer ces solutions sur la peau.

En effet, pour de telles applications, la présence de matières interférentes organiques ou minérales perturbent l'action de ces solutions expérimentales et connues, notamment lorsqu'elles sont utilisées avec de l'eau non distillée contenant du calcaire qui a tendance à se complexer avec ces matières interférentes en protégeant les éléments à détruire et ainsi à diminuer l'efficacité et l'activité des solutions utilisées.

Par ailleurs, certains tests sur des souches de micro-organismes et de levures, telles que les tests de la Pharmacopée française, n'ont pas été réalisés avec ces solutions expérimentales de sorte que leur utilisation industrielle dans ces conditions ne peut être envisagée.

La présente invention a pour but de proposer une solution antiseptique et/ou désinfectante comprenant au moins de l'hexamidine et un iodophore qui puisse être fabriqué et utilisé industriellement et qui présente des propriétés antiseptiques et désinfectantes permettant son utilisation notamment dans le domaine de l'hygiène humaine et/ou animale.

Un autre but de la solution antiseptique et/ou désinfectante conforme à l'invention réside dans le fait qu'elle est active vis-à-vis d'un grand nombre de bactéries notamment en présentant une efficacité accrue sur les souches microbiennes les plus difficiles à détruire ce qui en accroît ses capacités d'utilisation.

Un autre but de la solution antiseptique et/ou désinfectante réside dans le fait qu'elle est formulée avec de faibles quantités de principes actifs ce qui permet de réduire les phénomènes de toxicité, le coût des opérations de nettoyage et/ou de désinfection, tout en diminuant les rejets.

D'autres buts et avantages de la présente invention apparaîtront au cours de la description qui va suivre qui n'est donnée qu'à titre indicatif et qui n'a pas pour but de la limiter.

A cet effet, la solution antiseptique et/ou désinfectante, destinée notamment à l'hygiène humaine et/ou animale, comprenant au moins de l'hexamidine et un iodophore, est caractérisée par le fait qu'elle comporte en pourcentage en poids :
- de 0,001 à 1 % d'hexamidine,
- de 0,0013 à 4 % d'iodophore,
- de 99,9977 à 95 % de solvants,
la somme de ces différents composants en poids étant égale à 100 %.

La présente invention a pour objet une solution antiseptique et/ou désinfectante, destinée notamment à l'hygiène humaine et/ou animale comprenant au moins de l'hexamidine et un iodophore.

Elle trouvera son application dans tous les secteurs de l'activité économique dans lesquels il est nécessaire de nettoyer, de désinfecter et d'aseptiser les parties d'un corps humain ou animal, des objets divers, des locaux, etc.

A titre d'exemple, on peut citer une application de la solution antiseptique et/ou désinfectante conforme à l'invention pour le lavage des mains du personnel travaillant dans des hôpitaux, ou dont le travail impose des règles d'hygiène, et pour la désinfection des objets utilisés et pour ces locaux.

Selon l'invention, cette solution comporte en pourcentage en poids :
- de 0,001 à 1 % d'hexamidine,
- de 0,0013 à 4 % d'iodophore,
- de 99,9977 à 95 % de solvants,
la somme de ces composants étant égale à 100 %.

L'iodophore utilisé peut être un complexe contenant de l'iode, tel que par exemple de l'iode polyéthoxypolypropoxyéthanol, qui est associé avec l'hexamidine di-iséthiocyanate.

La proportion d'iodophore est telle qu'elle permet en outre d'agir comme agent oxydant notamment sur les matières organiques, ce qui accroît les propriétés antiseptiques et/ou désinfectantes de la composition.

Avec une telle composition, on a obtenu d'excellents résultats qui ont été confirmés par les tests de la Pharmacopée française sur des souches de levure et certains micro-organismes.

En outre, l'action de cette composition sur la peau permet d'agir sur les matières organiques ou minérales qui résistent à un simple lavage avec de l'eau pure ou avec des produits contenant des agents lavants.

En effet, dans le cas de l'utilisation d'eau pure, ces matières organiques et/ou minérales ont notamment, tendance à se complexer avec le calcaire, ou d'autres composés contenus dans celle-ci, ce qui rend plus difficile l'action des agents lavants sur ces éléments.

En ce qui concerne le solvant utilisé, il peut s'agir d'eau pure ou bien, lorsque l'on ne désire pas avoir une action de rinçage, d'un alcool, tel que par exemple éthanol, isopropanol, n-propanol seul ou en mélange, ou bien un mélange hydro-alcoolique voire tout autre solvant approprié et admissible.

La solution, selon l'invention, comporte des proportions assez faibles de produits actifs mais il peut être envisageable de mettre dans le commerce des solutions dont la concentration des produits actifs peut être plus élevée notamment en fonction des besoins.

Pour accroître les capacités d'utilisation et les résultats de la composition conforme à l'invention, elle comporte en outre des agents tensio-actifs qui permettent notamment de favoriser l'action des éléments actifs antiseptiques et/ou désinfectants.

Par ailleurs, la composition conforme à l'invention peut comporter en outre des agents colorants ainsi que des composés agissant sur les pH. Il peut par exemple s'agir de sels acidifiants ou alcalinisants, de manière à obtenir un pH compris entre 4 à 8.

On peut également ajouter à cette solution, des agents adoucissants tels que de la glycérine ou des agents humectants ou tout autre composé qui présente des propriétés adaptées en fonction des applications.

Bien entendu, la présente invention ne se limite pas à la seule forme de réalisation qui a été décrite mais au contraire, elle en embrasse toutes les variantes de réalisation.

## Revendications

1. Solution antiseptique et/ou désinfectante, destinée notamment à l'hygiène humaine et/ou animale, comprenant au moins de l'hexamidine et un iodophore, caractérisée en ce qu'elle comporte en pourcentage en poids :
- de 0,001 à 1 % d'hexamidine,
- de 0,0013 à 4 % d'iodophore,
- de 99,9977 à 95 % de solvants,
la somme des composants en poids étant égale à 100 %.

2. Solution antiseptique et/ou désinfectante selon la revendication 1, caractérisée en ce que le solvant est de l'eau, ou un alcool ou un mélange hydro-alcoolique.

3. Solution antiseptique et/ou désinfectante selon la revendication 1, caractérisée en ce qu'elle comporte en outre des agents tensio-actifs.

4. Solution antiseptique et/ou désinfectante selon la revendication 1, caractérisée en ce qu'elle comporte en outre des agents colorants.

5. Solution antiseptique et/ou désinfectante selon la revendication 1, caractérisée en ce qu'elle comporte des composés agissant sur le pH pour qu'il soit compris entre 4 et 8.

6. Solution antiseptique et/ou désinfectante selon la revendication 5, caractérisée en ce que les agents agissant sur le pH sont constitués par des sels acidifiants ou alcalinisants.

7. Solution antiseptique et/ou désinfectante selon la revendication 1, caractérisée en ce qu'elle comporte en outre des agents humectants.

8. Solution antiseptique et/ou désinfectante selon la revendication 1, caractérisée en ce qu'elle comporte en outre des agents adoucissants.
